# EUROPEAN PATENT APPLICATION

(11) **EP 3 232 051 A1**
(43) Date of publication of application: **18.10.2017**
(21) Application number: 16020135.6
(22) Date of filing: 13.04.2016
(51) Int. Cl.: F03D 7/02

(54) **METHOD AND DEVICE FOR LOADING DETECTION OF BLADE OF WIND POWER TURBINE**

(71) Applicant: Vihriälä, Harri, 85055 Ingolstadt (DE)
(72) Inventor: Vihriälä, Harri, 85055 Ingolstadt (DE)

(57) **Abstract**

In the blade of wind power turbine, there is one or more acceleration sensors included. At the blade is as well an integrated a measurement device which measure the distance between the sensor and tower. The acceleration sensors measure acceleration which is directly dependent on force. Due to the integration nature of the calculation method and natural drift of the sensors, the absolute position of the blade becomes gradually more and more inaccurate. To update the correct position, a measurement device is used, which measures the distance between this blade section and the tower. This measurement result is used to update the correct position. The signal of current pitch angle of the blade is as well received like the current rotational angle of the blades, indicating the rotational position of individual blades. These all signals are then processed in the central control unit, which calculates the deflection and forces at each accelerator sensor place.

## Description

### R. 42(1)(a) Technical field to which invention relates

The present invention relates to detecting loads of wind power plants, especially those of blades.

### R. 42(1)(b) Indication of the background art

In wind power plants generate electricity by using aerodynamic lift on specially formed blades. Part of these aerodynamic forces induced on blades causes torque, which rotates the turbine and is then converted further to electrical energy. Most of the aerodynamic force, however, bends the blades in the perpendicular direction, thus causing a deflection of the blade. The blades are usually dimensioned to be flexible to sustain these loads, but when bent excessively or too many times, the blades may broke down or hit the tower, especially on so-called upwind, horizontal axis turbines, which are placed on upwind side of the tower.

The loading is controlled by controlling the angle of attack, the angle in which the air arrives at the blade. The control is also done by changing the tongue of the generator, which brakes down the turbine.

The loads are measured by strain gauges at prototype phase and the control parameters are tuned accordingly. However, due to changes in the conditions between various sites, due to temperature and weather as well as effect of manufacturing: Different moulids, materials and process personnel, there is always certain variation between the individual blades. Therefore, single set of parameters does guarantee the correct function at all sites.

### R. 42(1)(c)

### Technical problem to be solved

The objective of the present invention is to provide means to lower the loads and the deflection on wind turbine blades and furthermore to the other structure. The objective is as well inhibit, that the blades hit the tower structure. The variation due to site, weather, temperature and manufacturing should be compensated as well.

### R 42(1)(c) Disclosure of invention

In accordance with the present invention, a device to detect the loads and the deflection, like acceleration sensors, is placed to the wind turbine blades to monitor these variables. The acceleration sensors measure acceleration which is directly dependent on force. Integrating this acceleration twice over the time, a deflection is obtained. Due to the integration nature of the calculation method and natural drift of the sensors, the absolute position of the blade becomes gradually more and more inaccurate. To update the correct position, a measurement device is used, which measures the distance between this blade section and the tower. This measurement result is used to update the correct position.

In the blade of wind power turbine, there is one or more acceleration sensors included, especially so-called three-axis integrated accelerometers can be used which measure the acceleration in all three axes simultaneously. At the blade is as well a integrated a measurement device, like laser or ultrasonic sensors, which measure the distance between the sensor and tower (or other stationary object).

The signal of current pitch angle of the blade is as well received like the current rotational angle of the blades, indicating the rotational position of individual blades, and a yaw angle as well. The tower and nacelle of the wind turbine may have as well their own acceleration sensors in the wind direction and perpendicular of that.

These all signals are then processed in the central control unit, which calculates the deflection and forces at each accelerator sensor place. The value of deflection is corrected by measurement of the distance between tower and blade. Pitch angle is required, since when pitching blades out of the normal operating position, the measurement values change. The rotational speed helps indication in-rotational plane deflection and indicates when the blades should be near tower. In addition, the similar acceleration sensors mounted into the tower and/or the nacelle give information about the tower deflection, which can be utilized on calculating the blade forces.

These values of forces and deflection are in turn given to a central control algorithm of the wind turbine, which uses the values for limiting the forces and deflection to given limits. The signals can also be forwarded to external monitoring device, especially during prototype and commissioning phase.

During commissioning the distance measurement can be calibrated with different pitch angles with parked turbine preferably at windstill. The geometric deviations of blade can as well be controlled. With locked rotor, at various rotational positions (up-down-left -right), the accelerations sensors can be calibrated by earth gravity force when pitching the blade.

At windy weather the various eigenfrequencies of given blade can be measured when the wind gives an excitation to the vibrations of the blade. As well, during operation at different rotational speed and eigenfrequenciues of given blades can be adjusted.

If the tower has not round cross section, the distance to blade varies by yaw angle. This can be corrected by taking the yaw angle into consideration when analyzing the distance measurement.

### R. 42(1)(d) Brief description of drawings

In the drawings:

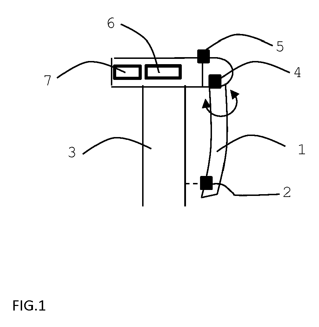

Fig. 1 shows a wind turbine with one blade (1) with acceleration sensor and measurement unit (2), which measures the distance to the tower (3). There is also a pitch controller (4) which measures the pitch angle and rotational angle sensor (5) which measures the angular position of the turbine around the shaft. The signals from these sensors are connected to evaluation unit (6), which evaluated the forces and deflection of the turbine and passes it to the central control unit (7) of the turbine

### R. 42(1)(e) Description of at least one way of carrying out the invention

The acceleration sensors and ultrasonic distance measurements installed into all the blades of the wind turbines. These sensors send measurement signal to evaluating unit, which is based e.g. on standard microcontroller chip. The pitch angles and rotational and yaw angles are obtained by the evaluation unit as well. The evaluating unit, after calibrated after commissioning, will calculate forces and deflections on the blades. These data is then forwarded to the main controller of the wind turbine, which uses the data to minimize the loads and to avoid the blades hitting the tower during the operation of the wind turbine.

## Claims

1. We claim a method of determining the deflections and forces on a blade (1) of a wind power turbine by measuring the acceleration at least in one blade (1) at least with one sensor (2) in all three axes, pitch angle and an rotational angle and corrugating this value by measuring the distance to the tower by e.g. using an ultrasonic sensor.

2. A method of claim 1, where the distance from the blade to the tower (3) can be measured by other means as well.

3. A method according to at least one of the aforementioned claims, where the gravity vector in combination with pitch and rotational angle is used as an aid to correlate the drift of the aforementioned method in claim 1.

4. A method according to at least one of the aforementioned claims where this method can be used to detect and correlate the errors in the measurement like but not limited to in pitch angle, rotational angle, tower deflection etc.

5. A method according to at least one of the aforementioned claims where this method can be used to detect the manufacturing variations of the blades. For this purpose a calibration round may be used where the turbine rotates at slow speed at minimum wind speed. The method will detect the deflections of the blades due to gravity forces. During the round the blades are pitched into various positions in order to detect the manufacturing variations in the both directions.
